# EUROPÄISCHE PATENTSCHRIFT

(11) **EP 1 867 500 B1**
(45) Veröffentlichungstag und Bekanntmachung des Hinweises auf die Patenterteilung: **22.07.2009**
(21) Anmeldenummer: 07450072.9
(22) Anmeldetag: 17.04.2007
(51) Int. Cl.: B60D 1/46

(54) **Hubkupplung**
Stroke coupling
Couplage de moyeux

(30) Priorität: 16.06.2006 AT 10282006
(43) Veröffentlichungstag der Anmeldung: 19.12.2007
(73) Patentinhaber: Scharmüller, Josef, 4892 Fornach (AT)
(72) Erfinder: Scharmüller, Josef, 4892 Fornach (AT)
(74) Vertreter: Gibler & Poth Patentanwälte OEG

(56) Entgegenhaltungen:
- EP-A- 1 574 364
- EP-A1- 0 277 103
- EP-A2- 0 308 271
- DE-U1- 20 319 852
- DE-U1- 29 520 847
- GB-A- 1 241 083
- GB-A- 2 208 583

## Beschreibung

Die Erfindung betrifft eine Hubkupplung mit einer Anbaukonsole, einer gegenüber der Anbaukonsole um eine Schwenkachse schwenkbar gelagerten Schwenkkonsole und einem in der Schwenkkonsole verschiebbar gelagerten Schlittenelement, wobei die Anbaukonsole eine Verriegelungsvorrichtung zur Verriegelung des Schlittenelementes im hochgeschwenkten Zustand der Schwenkkonsole aufweist, und wobei das Schlittenelement in wenigstens zwei unterschiedlichen Positionen mittels der Verriegelungsvorrichtung verriegelbar ist.

Bekannte derartige Hubkupplungen werden auch als Pick-Up-Hitch bezeichnet. Die Anbaukonsole ist an einem Zugfahrzeug od. dgl. befestigt, wobei ein mit der Schwenkkonsole verbundener Kupplungshaken bis zum Untergrund abgesenkt werden kann und eine im Bereich des Untergrunds angeordnete Zugöse eines Anhängers od. dgl. aufgenommen und durch Anheben der Schwenkkonsole mit dem Zugfahrzeug gekuppelt werden kann. Nachteilig dabei ist, dass derartige Hubkupplungen zum Zusammenwirken mit einer Vielzahl unterschiedlicher Anhänger große Baugrößen aufweisen.

Aus der EP 308 271 A ist eine gattungsgemäße Hubkupplung bekannt, bei der ein Schlittenelement in unterschiedlichen Positionen fixiert werden kann.

Aufgabe der Erfindung ist es, eine Hubkupplung der eingangs genannten Art anzugeben, bei der die bekannten Nachteile vermieden sind, die bei einer Vielzahl verschiedener Anhänger eingesetzt werden kann, einfach an unterschiedliche Anhänger angepasst werden und hohe Kräfte übertragen kann, die eine kompakte Bauform aufweist und einfach und kostengünstig herstellbar ist.

Erfindungsgemäß wird dies dadurch erreicht, dass das Schlittenelement eine Aufnahme aufweist und dass in der Aufnahme ein Kupplungselement zur Anpassung an unterschiedliche Anhänger, insbesondere ein Zughaken, ein Zugpendel oder eine Kupplungskugel, lösbar befestigt ist, und dass verschiedene Auslegungslängen des Kupplungselementes vorgesehen sind.

Dabei ergibt sich der Vorteil, dass mit dem Schlittenelement unterschiedliche vorgebbare Auslegungslängen der Hubkupplung bereitgestellt werden können, wobei das Schlittenelement jeweils mittels der Verriegelungsvorrichtung gesichert ist. Dabei können Kräfte von einem Anhänger mittels des Schlittenelementes übertragen werden, wobei hohe zulässige Beanspruchungen erreicht werden.

Unterschiedliche Kupplungselemente können schnell und einfach ausgetauscht werden und die Hubkupplung kann an unterschiedliche Anhänger angepasst werden.

Gemäß einer weiteren Ausführungsform der Erfindung kann vorgesehen sein, dass die Verriegelungsvorrichtung zumindest einen Bolzen umfasst und das Schlittenelement gegengleiche Bohrungen aufweist. Dies stellt eine besonders einfache Ausgestaltung der Verriegelungsvorrichtung dar.

In weiterer Ausgestaltung der Erfindung kann vorgesehen sein, dass der Bolzen in Richtung der Verriegelungsstellung vorgespannt ist, wodurch eine automatische und zuverlässige Verriegelung des Schlittenelementes bereitgestellt werden kann.

In Weiterführung der Erfindung kann vorgesehen sein, dass der Bolzen ein sich konisch verjüngendes Ende zum Eingriff in die Bohrungen aufweist und/oder dass die Bohrungen sich in Richtung des Bolzens konisch erweiternd ausgebildet sind. Dadurch kann auch bei Maßungenauigkeiten ein sicheres Verriegeln des Schlittenelementes sichergestellt werden, wobei der Querschnitt des Bolzens zu Beginn der Verriegelung kleiner als der Querschnitt der Bohrung ist. Durch die konische Ausbildung kann weiters sichergestellt werden, dass die Verriegelung weitgehend spielfrei ist.

Gemäß einer weiteren Ausführung der Erfindung kann vorgesehen sein, dass die Verriegelungsvorrichtung zwei Bolzen umfasst, wobei zwischen den Bolzen ein Kolben-Zylinder-System zum Verfahren des Schlittenelementes angeordnet ist. Dabei können die Verriegelungsvorrichtung und das Kolben-Zylinder-System einfach nebeneinander angeordnet werden, wobei das Schlittenelement mit dem Kolben-Zylinder-System verschoben werden kann.

In weiterer Ausbildung der Erfindung kann vorgesehen sein, dass die Verriegelungsvorrichtung, vorzugsweise der Bolzen, zwischen zwei Kolben-Zylinder-Systemen zum Verfahren des Schlittenelementes angeordnet ist. Dabei kann die Kraftübertragung auf die Verriegelungsvorrichtung in der Symmetrieachse des Schlittenelementes erfolgen. Weiters kann das Kupplungselement in der Symmetrieachse weit in das Schlittenelement ragen, wobei große Auslegungslängen bereitgestellt werden können und eine besonders kompakte Bauform ausgebildet werden kann.

In Weiterbildung der Erfindung kann vorgesehen sein, dass die Verriegelungsvorrichtung zwischen der Schwenkachse und einer Befestigungsplatte angeordnet ist, wodurch eine besonders kompakte Bauform der Hubkupplung erreicht werden kann und geringe Auslegungslängen bereitgestellt werden können.

Gemäß einer weiteren Ausgestaltung der Erfindung kann vorgesehen sein, dass die Anbaukonsole eine Befestigungsvorrichtung für ein mit dem Kuppelelement zusammenwirkendes Sicherungselement, insbesondere einen Niederhalter, umfasst, wodurch gegebenenfalls ein Sicherungselement einfach und zuverlässig mit der Anbaukonsole verbunden werden kann.

In weiterer Ausbildung der Erfindung kann vorgesehen sein, dass das Kupplungselement an einem ersten Ende eine erste Kupplungseinrichtung und an dem dem ersten Ende gegenüberliegenden zweiten Ende eine zweite Kupplungseinrichtung aufweist, wodurch mit einer geringen Anzahl an Kupplungselementen eine Vielzahl an verschiedenen Anhängesystemen mit der Hubkupplung verbunden werden können.

In diesem Zusammenhang kann in Weiterbildung der Erfindung vorgesehen sein, dass die erste Kupplungseinrichtung gegenüber der zweiten Kupplungseinrichtung um 90° verdreht ist, wodurch die jeweils nicht verwendete Kupplungseinrichtung einfach in der Aufnahme des Schlittenelementes untergebracht werden kann.

Die Erfindung wird unter Bezugnahme auf die beigeschlossenen Zeichnungen, in welchen Ausführungsformen beispielhaft dargestellt sind, näher beschrieben. Dabei zeigt:
Fig. 1 eine Ausführungsform einer erfindungsgemäßen Hubkupplung in Schrägansicht mit einem Zughaken:
Fig. 2 die Hubkupplung gemäß Fig. 1 mit Zughaken in Seitenansicht im Schnitt;
Fig. 3 die Hubkupplung gemäß Fig. 1 mit Zugpendel in Seitenansicht im Schnitt;
Fig. 4 die Hubkupplung gemäß Fig. 1 mit Zugpendel in Seitenansicht im Schnitt;
Fig. 5 bis 7 die Hubkupplung gemäß Fig. 1 mit Kupplungskugel in Seitenansicht;
Fig. 8 und 9 die Hubkupplung gemäß Fig. 1 mit Zughaken in Seitenansicht;
Fig. 10 und 11 die Hubkupplung gemäß Fig. 1 mit Zugpendel in Seitenansicht;
Fig. 12 und 13 eine andere Ausführungsform der erfindungsgemäßen Hubkupplung in Seitenansicht im Schnitt und in Draufsicht;
Fig. 14 eine Draufsicht auf eine weitere Ausführungsform des Schlittenelementes;
Fig. 15 eine Seitenansicht auf den Bolzen und das Schlittenelement im Schnitt gemäß der Linie C-C in Fig. 14;
Fig. 16 eine erste Ausführungsform eines Kupplungselementes in Seitenansicht;
Fig. 17 das Kupplungselement nach Fig. 16 in Draufsicht;
Fig. 18 eine zweite Ausführungsform eines Kupplungselementes in Seitenansicht;
Fig. 19 das Kupplungselement nach Fig. 18 in Draufsicht;

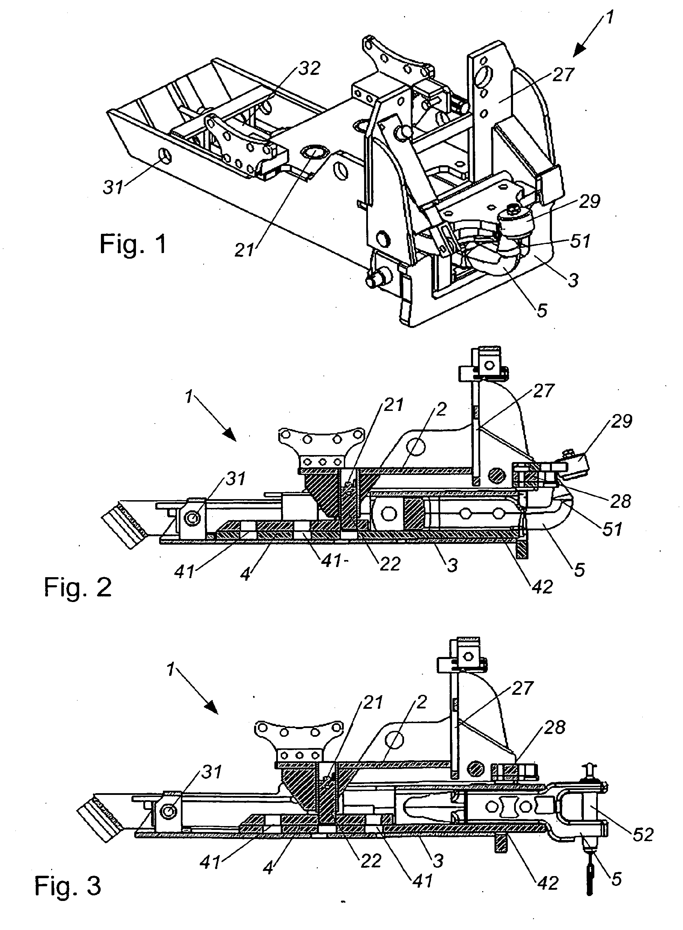

In den Fig. 1 bis 11 ist eine Ausführungsform einer erfindungsgemäßen Hubkupplung 1 dargestellt, wobei in den Figuren unterschiedliche Kupplungselemente 5 mit der Hubkupplung 1 verbunden sind.

Die Hubkupplung 1 weist eine Anbaukonsole 2, eine gegenüber der Anbaukonsole 2 um eine Schwenkachse 31 schwenkbar gelagerte Schwenkkonsole 3 und ein in der Schwenkkonsole 3 verschiebbar gelagertes Schlittenelement 4 auf. Die Anbaukonsole 2 weist eine Verriegelungsvorrichtung 21 zur Verriegelung des Schlittenelementes 4 im hochgeschwenkten Zustand der Schwenkkonsole 3 auf, wobei das Schlittenelement 4 in wenigstens zwei unterschiedlichen Positionen mittels der Verriegelungsvorrichtung 21 verriegelbar ist.

Die Anbaukonsole 2 kann mit einem Zugfahrzeug verbunden werden. Dies kann insbesondere mittels der Befestigungsplatte 27 erfolgen, wobei die Befestigungsplatte 27 üblicherweise mit der hinteren Rückwand des Zugfahrzeuges abschließt.

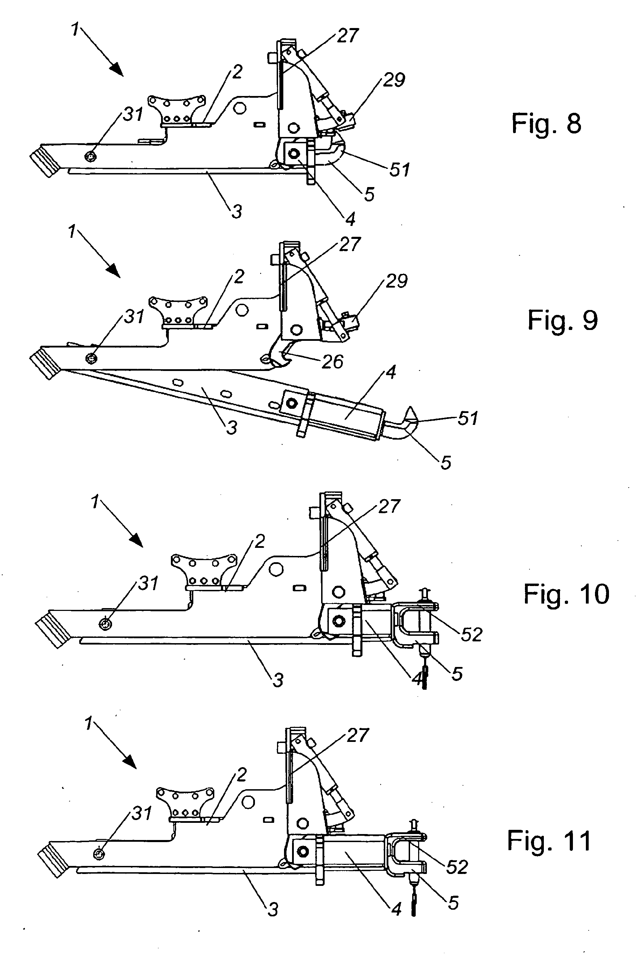

Im hochgeschwenkten Zustand der Schwenkkonsole 3 kann diese mittels eines Hakenelementes 26, das insbesondere in Fig. 9 ersichtlich ist, mit der Anbaukonsole 2 verriegelt werden. Bei anderen Ausführungsformen kann auch eine andere Verriegelung der Schwenkkonsole 3 gegenüber der Anbaukonsole 2 im hochgeschwenkten Zustand vorgesehen sein.

Das Schlittenelement 4 weist eine Aufnahme 49 für Kupplungselemente 5 auf, wobei das Kupplungselement 5 insbesondere als Zughaken 51, als Zugpendel 52 oder als Kupplungskugel 53 ausgebildet sein kann. Es können aber auch andere Ausformungen des Kupplungselementes 5 vorgesehen sein. Die Wahl des Kupplungselementes 5 ist insbesondere von dem zu verwendenden Anhänger abhängig. Das Kupplungselement 5 kann als Einschub in die Aufnahme 49 ausgebildet sein.

Bei anderen Ausführungsformen kann auch das Schlittenelement 4 das Kupplungselement 5 aufweisen, wobei ein modularer Aufbau mit mehreren Kupplungselementen 5 dann üblicherweise nicht möglich ist.

Für die Verschwenkbarkeit des Anhängers im gekuppelten Zustand ist der Abstand des Kupplungselementes 5 von dem Zugfahrzeug, der üblicherweise dem Abstand des Kupplungselementes 5 von der Befestigungsplatte 27 entspricht eine wesentliche Größe. Dieser Abstand wird auch als Auslegungslänge bezeichnet. Eine große Auslegungslänge ermöglicht üblicherweise eine gute Verschwenkbarkeit, bedingt aber durch die größeren Hebelarme eine höhere Beanspruchung der Hubkupplung 1 im Vergleich zu einer kleinen Auslegungslänge.

Durch die Verriegelungsvorrichtung 21 kann das Schlittenelement 4 so verrastet werden, dass unterschiedliche Auslegungslängen bereitgestellt werden, wobei das Schlittenelement 4 zusätzlich zu dem Kupplungselement 5 wenigstens einen Teil der auftretenden Beanspruchungen aufnehmen kann, das Schlittenelement 4 also neben dem Kupplungselement 5 die Kupplungskräfte aufnimmt. Dadurch kann die Dimensionierung der Hubkupplung 1 gering gehalten werden, da die Beanspruchungen in dem die Befestigungsplatte 27 überragenden Bereich nicht nur von dem Kupplungselement 5 aufgenommen werden müssen.

Die Verriegelungsvorrichtung 21 kann zumindest einen Bolzen 22 umfassen und das Schlittenelement 4 gegengleiche Bohrungen 41 aufweisen. Dies stellt eine bevorzugte und einfache Ausgestaltung der Verriegelungsvorrichtung 21 dar. Dabei weist das Schlittenelement 4 an jeder verriegelbaren Position eine Bohrung 41 auf.

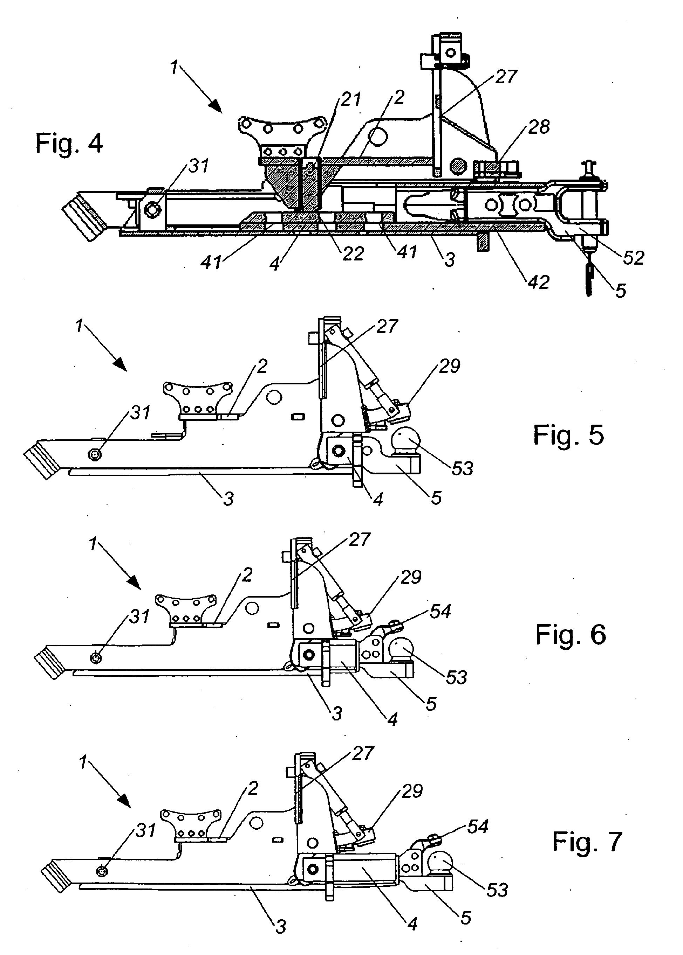

Der Bolzen 22 kann in Richtung der Verriegelungsstellung vorgespannt sein. Dadurch kann sichergestellt werden, dass der Bolzen 22 in eine Bohrung 41 selbsttätig einrastet, sofern die Schwenkkonsole 3 hochgeschwenkt und das Schlittenelement 4 in einer verriegelbaren Position ist. Zum Verbringen des Schlittenelementes 4 aus einer verriegelbaren Position in eine andere verriegelbare Position kann die Schwenkkonsole 3 so weit nach unten geschwenkt werden, dass das Schlittenelement 4 freigegeben wird, anschließend das Schlittenelement 4 verschoben werden und die Schwenkkonsole 3 wieder hochgeschwenkt werden. Daraufhin kann sich der Bolzen 22 in der in Fig. 4 gezeigten Stellung befinden, wobei das Schlittenelement 4 nicht verriegelt ist. Das Schlittenelement 4 kann nun so lange verschoben werden, bis der Bolzen 22 in einer Bohrung 41 einrastet.

Bei anderen Ausführungsformen kann auch vorgesehen sein, dass das Schlittenelement 4 Bolzen umfasst und in der Anbaukonsole 2 gegengleiche Bohrungen angeordnet sind. Bei wieder anderen Ausführungsformen können auch andere Mechanismen zur Verriegelung vorgesehen sein. Beispielsweise können mehrere Bolzen 22 und lediglich eine Bohrung 41 vorgesehen sein, wobei jeweils einer dieser Bolzen 22 in den verschiedenen Stellungen in die Bohrung 41 eingreift.

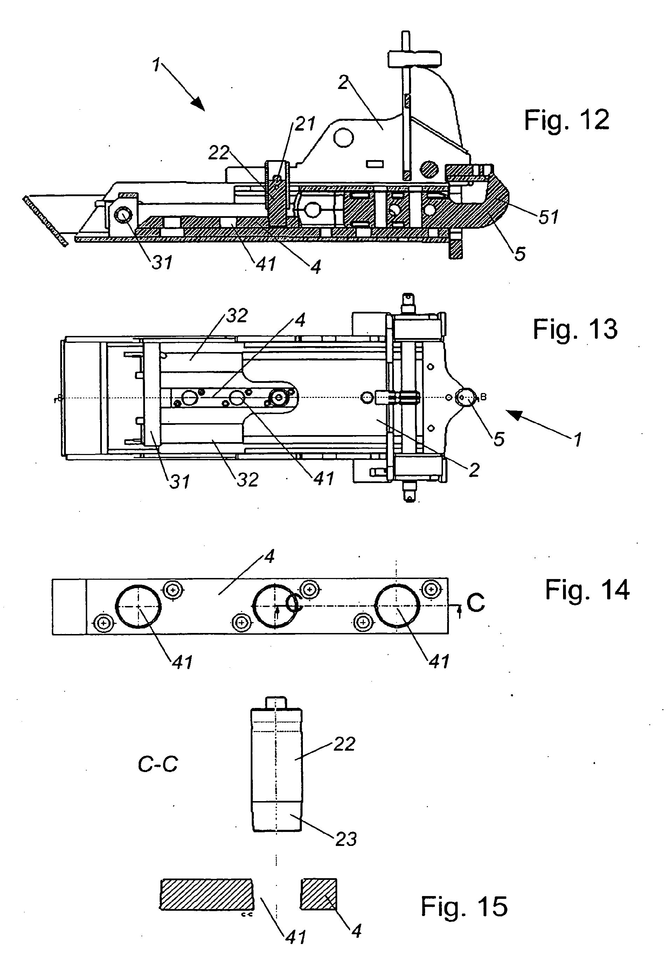

Der Bolzen 22 kann ein sich konisch verjüngendes Ende 23 zum Eingriff in die Bohrung 41 aufweisen. Bei anderen Ausführungsformen kann sich die Bohrung 41 in Richtung des Bolzens 22 konisch erweitern. Es kann auch der Bolzen ein sich konisch verjüngendes Ende 23 aufweisen und sich die Bohrung 41 in Richtung des Bolzens 22 konisch erweitern, wie in Fig. 14 und 15 dargestellt ist. Vorzugsweise sind dabei der Bolzen 22 und die Bohrung 41 gegengleich ausgebildet. Zu Beginn der Verriegelung, wenn der Bolzen 22 in die Bohrung 41 geführt wird, wirkt der kleinste Querschnitt des Bolzens 22 mit dem größten Querschnitt der Bohrung 41 zusammen, wodurch auch bei Maßungenauigkeiten sichergestellt werden kann, dass der Bolzen 22 in die Bohrung 41 geführt werden kann. In weiterer Folge kann der Bolzen 22 so weit in die Bohrung 41 geführt werden, bis sich eine weitgehend spielfreie Verriegelung ergibt. Durch die Spielfreiheit werden Stöße zwischen der Verriegelungsvorrichtung 21 und dem Schlittenelement 4 vermieden, wodurch eine hohe Lebensdauer der Teile sichergestellt werden kann.

Das Verschieben des Schlittenelementes 4 kann einfach mittels eines Kolben-Zylinder-Systems 32 erfolgen, welcher in der Längsachse des Schlittenelementes 4 angeordnet sein kann.

Bei der in den Fig. 1 bis 11 gezeigten Ausführungsform ist vorgesehen, dass die Verriegelungsvorrichtung 21 zwei Bolzen 22 umfasst und das Kolben-Zylinder-System 32 zwischen den Bolzen 22 angeordnet ist. Dies stellt eine besonders einfache und kompakte Bauform der Hubkupplung 1 dar.

Die in den Fig. 12 und 13 gezeigten Ausführungsform weist zwei Kolben-Zylinder-Systeme 32 auf, wobei die Verriegelungsvorrichtung 21 zwischen den Kolben-Zylinder-Systemen 32 angeordnet ist, wobei ebenfalls eine besonders einfache und kompakte Bauform der Hubkupplung 1 erreicht wird. Bei dieser Ausführungsform kann die Kraftübertragung auf die Verriegelungsvorrichtung 21 in der Symmetrieachse des Schlittenelementes 4 erfolgen. Weiters kann das Kupplungselement 5 in der Symmetrieachse weit in das Schlittenelement 4 ragen, wobei große Auslegungslängen bereitgestellt werden können und eine große Aufnahme 42 ausgebildet ist. Auch das Schlittenelement 4 kann zwischen den Kolben-Zylinder-Systemen 32 einen großen Bereich mit Bohrungen 41 aufweisen.

Die Verriegelungsvorrichtung 21 kann zwischen der Schwenkachse 31 und der Befestigungsplatte 27 angeordnet sein. Dabei kann vermieden werden, die Verriegelungsvorrichtung 21 in über die Rückseite des Zugfahrzeuges hinausragenden Teilen der Hubkupplung 1 unterzubringen. Diese Ausgestaltung ermöglicht die Realisation von besonders kleinen Auslegungslängen.

Bei dem Kupplungselement 5 kann ein zusätzliches Sicherungselement 29, 54 vorgesehen sein, insbesondere bei dem Zughaken 51 und der Kupplungskugel 53. Dabei kann das Sicherungselement 29 mit der Anbaukonsole 2 verbunden sein, wobei die Anbaukonsole 2 für die Befestigung eine Befestigungsvorrichtung 28 aufweist. In den Fig. 1, 2 und 5 bis 9 ist das Sicherungselement 29 als Niederhalter ausgebildet und mit der Befestigungsvorrichtung 28 verbunden.

Das mit der Anbaukonsole 2 verbundene Sicherungselement 29 ist üblicherweise lediglich für eine Auslegungslänge vorgesehen. Für andere Auslegungslängen kann das Kupplungselement 5 mit einem weiteren Sicherungselement 54 ausgestattet sein, wie dies aus den Fig. 6 und 7 hervorgeht, bei dem das Kupplungselement 5 die Kupplungskugel 53 und das als Niederhalter ausgebildete weitere Sicherungselement 54 umfasst.

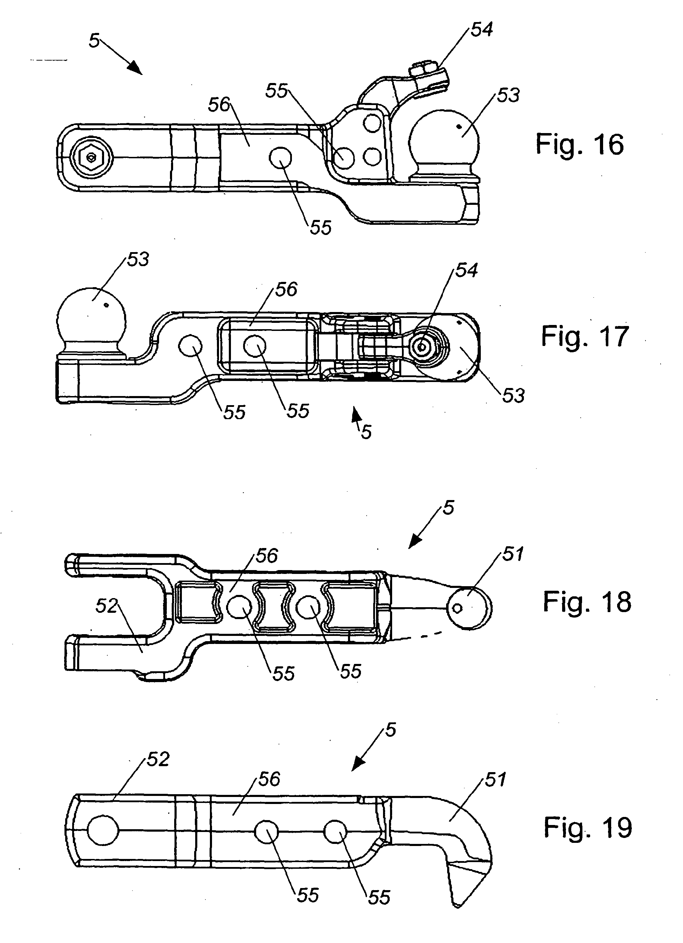

In den Fig. 16 bis 19 sind zwei Ausführungsformen des Kupplungselementes 5 gezeigt. Das Kupplungselement 5 weist an einem ersten Ende eine erste Kupplungseinrichtung 51, 52, 53 und an dem dem ersten Ende gegenüberliegenden zweiten Ende eine zweite Kupplungseinrichtung 51, 52, 53 auf. Dabei kann die erste Kupplungseinrichtung 51, 52, 53 insbesondere als Zughaken 51, als Zugpendel 52 oder als Kupplungskugel 53 ausgebildet sein. Dabei kann das Kupplungselement 5 mit dem Schlittenelement verbunden werden, wobei entweder die erste Kupplungseinrichtung 51, 52, 53 oder die zweite Kupplungseinrichtung 51, 52, 53 zum Kuppeln mit einem Anhänger bereitgestellt ist.

Die jeweils andere Kupplungseinrichtung 51, 52, 53 wird von der Aufnahme 42 des Schlittenelementes 4 aufgenommen. Dabei hat es sich als günstig erwiesen, wenn die erste Kupplungseinrichtung 51, 52, 53 gegenüber der zweiten Kupplungseinrichtung 51, 52, 53 um 90° verdreht angeordnet ist. Dabei kann eine geringe Bauhöhe der von der Aufnahme aufzunehmenden Kupplungseinrichtung 51, 52, 53 sichergestellt werden.

Bei einer ersten Ausführungsform des Kupplungselementes 5 können eine Kupplungskugel 53 mit einem zusätzlichen Sicherungselement 54 und eine Kupplungskugel 53 ohne zusätzlichem Sicherungselement 54 bereitgestellt werden, wie dies in den Fig. 16 und 17 gezeigt ist. Dabei kann die Kupplungskugel 53 ohne zusätzlichem Sicherungselement 54 zum Zusammenwirken mit dem mit der Anbaukonsole 2 verbundenen Sicherungselement 29 vorgesehen sein.

Bei einer weiteren Ausführungsform des Kupplungselementes 5 können ein Zughaken 51 und ein Zugpendel 52 bereitgestellt werden, wie dies in den Fig. 18 und 19 gezeigt ist.

Bei wieder anderen Ausführungsformen können auch andere Kupplungseinrichtung 51, 52, 53 kombiniert werden, beispielsweise ein Zughaken 51 mit einer Kupplungskugel 53, welche gegebenenfalls ein zusätzliches Sicherungselement 54 aufweisen kann oder ein Zugpendel 52 mit einer Kupplungskugel 53, welche gegebenenfalls ein zusätzliches Sicherungselement 54 aufweisen kann.

Das Kupplungselement kann gemäß den Fig. 16 bis 19 einen Schaft 56 mit im Wesentlichen quadratischem Querschnitt aufweisen. Die Breite - jeweils in der Betriebslage gesehen - der ersten Kupplungseinrichtung 51, 52, 53 und der zweiten Kupplungseinrichtung 51, 52, 53 sind dabei vorzugsweise kleiner oder gleich der entsprechenden Breite des Schaftes 56. Bei einem quadratischen Querschnitt entspricht die Breite des Schaftes 56 der Seitenlänge des quadratischen Querschnitts.

Die Höhe - jeweils in der Betriebslage gesehen - der ersten Kupplungseinrichtung 51, 52, 53 und/oder der zweiten Kupplungseinrichtung 51, 52, 53 können dabei insbesondere symmetrisch zur Längsachse des Schaftes 56 angeordnet sein. Dabei kann die Kupplungskugel 53 auf einem gekröpften Bereich des Kupplungselementes 5 angeordnet sein kann, wie dies aus den Fig. 16 und 17 ersichtlich ist. Weiters können die Schenkel des Zugpendeles 52 als gekröpfte Bereiche gegenüber dem Schaft 56 ausgebildet sein.

Weiters können Befestigungsöffnungen 55 zum Verbinden mit dem Schlittenelement 4 vorgesehen sein. Dabei können die Befestigungsöffnungen 55 zum Bereitstellen der ersten Kupplungseinrichtung 51, 52, 53 gegenüber den Befestigungsöffnungen 55 zum Bereitstellen der zweiten Kupplungseinrichtung 51, 52, 53 um 90° versetzt angeordnet sein. Um eine gute Krafteinleitung zu erreichen, sind die Befestigungsöffnungen 55 vorzugsweise seitlich gegeneinander versetzt und schneiden sich nicht.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Hubkupplung (1) mit einer Anbaukonsole (2), einer gegenüber der Anbaukonsole (2) um eine Schwenkachse (31) schwenkbar gelagerten Schwenkkonsole (3) und einem in der Schwenkkonsole (3) verschiebbar gelagerten Schlittenelement (4), wobei die Anbaukonsole (2) eine Verriegelungsvorrichtung (21) zur Verriegelung des Schlittenelementes (4) im hochgeschwenkten Zustand der Schwenkkonsole (3) aufweist, und wobei das Schlittenelement (4) in wenigstens zwei unterschiedlichen Positionen mittels der Verriegelungsvorrichtung (21) verriegelbar ist, wobei das Schlittenelement (4) eine Aufnahme (49) aufweist und in der Aufnahme ein Kupplungselement (5) zur Anpassung an unterschiedliche Anhänger, insbesondere ein Zughaken (51), ein Zugpendel (52) oder eine Kupplungskugel (53), lösbar befestigt ist, **dadurch gekennzeichnet, dass** verschiedene Auslegungslängen des Kupplungselementes (5) vorgesehen sind.

2. Hubkupplung nach Anspruch 1, **dadurch gekennzeichnet, dass** die Verriegelungsvorrichtung (21) zumindest einen Bolzen (22) umfasst und das Schlittenelement (4) gegengleiche Bohrungen (41) aufweist.

3. Hubkupplung nach Anspruch 2, **dadurch gekennzeichnet, dass** der Bolzen (22) in Richtung der Verriegelungsstellung vorgespannt ist.

4. Hubkupplung nach Anspruch 2 oder 3, **dadurch gekennzeichnet, dass** der Bolzen (22) ein sich konisch verjüngendes Ende (23) zum Eingriff in die Bohrungen (41) aufweist und/oder dass die Bohrungen (41) sich in Richtung des Bolzens (22) konisch erweiternd ausgebildet sind.

5. Hubkupplung nach Anspruch 2, 3 oder 4, **dadurch gekennzeichnet, dass** die Verriegelungsvorrichtung (21) zwei Bolzen (22) umfasst, wobei zwischen den Bolzen (22) ein Kolben-Zylinder-System (32) zum Verfahren des Schlittenelementes (4) angeordnet ist.

6. Hubkupplung nach einem der Ansprüche 1 bis 4, **dadurch gekennzeichnet, dass** die Vernegelungsvorrichtung (21), vorzugsweise der Bolzen (22), zwischen zwei Kolben-Zylinder-Systemen (32) zum Verfahren des Schlittenelementes (4) angeordnet ist.

7. Hubkupplung nach einem der Ansprüche 1 bis 6, **dadurch gekennzeichnet, dass** die Verriegelungsvorrichtung (21) zwischen der Schwenkachse (31) und einer Befestigungsplatte (27) angeordnet ist.

8. Hubkupplung nach einem der Ansprüche 1 bis 7, **dadurch gekennzeichnet, dass** die Anbaukonsole (2) eine Befestigungsvorrichtung (28) für ein mit dem Kuppelelement (5) zusammenwirkendes Sicherungselement (29), insbesondere einen Niederhalter, umfasst.

9. Hubkupplung nach einem der Ansprüche 1 bis 8, **dadurch gekennzeichnet, dass** das Kupplungselement (5) an einem ersten Ende eine erste Kupplungseinrichtung (51, 52, 53) und an dem dem ersten Ende gegenüberliegenden zweiten Ende eine zweite Kupplungseinrichtung (51, 52, 53) aufweist.

10. Hubkupplung nach Anspruch 9, **dadurch gekennzeichnet, dass** die erste Kupplungseinrichtung (51, 52, 53) gegenüber der zweiten Kupplungseinrichtung (51, 52, 53) um 90° verdreht ist.

## Claims

1. A lifting hitch (1) with an add-on bracket (2), a swiveling bracket (3) which is swivelably held about a swiveling axis (31) in relation to the add-on bracket (2) and a carriage element (4) which is held in a displaceable manner in the swiveling bracket (3), with the add-on bracket (2) comprising a locking apparatus (21) for locking the carriage element (4) in the upwardly swiveled state of the swiveling bracket (3), and with the carriage element (4) being lockable in at least two different positions by means of the locking apparatus (21), with the carriage element (4) comprising a receiver (49) and a hitch element (5) being detachably fastened in the receiver for adjustment to different trailers, especially a tow-hook (51), an adjustable drawbar (52) or a hitch ball (53), **characterized in that** various dimensioning lengths of the hitch element (5) are provided.

2. A lifting hitch according to claim 1, **characterized in that** the locking apparatus (21) comprises at least one pin (22) and the carriage element (4) comprises mirror-inverted bore holes (41).

3. A lifting hitch according to claim 2, **characterized in that** the pin (22) is pretensioned in the direction of the locking position.

4. A lifting hitch according to claim 2 or 3, **characterized in that** the pin (22) comprises a conically tapering end (23) for engagement in the bore holes (41) and/or the bore holes are arranged to be conically expanding in the direction of the pin (22).

5. A lifting hitch according to claim 2, 3 or 4, **characterized in that** the locking apparatus (21) comprises two pins (22), with a piston/cylinder system (32) for displacing the carriage element (4) being arranged between the pins (22).

6. A lifting hitch according to one of the claims 1 to 4, **characterized in that** the locking apparatus (21), preferably the pin (22), is arranged between two piston/cylinder systems (32) for displacing the carriage element (4).

7. A lifting hitch according to one of the claims 1 to 6, **characterized in that** the locking apparatus (21) is arranged between the swiveling axis (31) and the fixing plate (27).

8. A lifting hitch according to one of the claims 1 to 7, **characterized in that** the add-on bracket (2) comprises a fixing apparatus (28) for a securing element (29) cooperating with the hitch element (5), especially a retaining element.

9. A lifting hitch according to one of the claims 1 to 8, **characterized in that** the hitch element (5) comprises a first hitch device (51, 52, 53) at a first end and a second hitch device (51, 52, 53) at the second end opposite of the first end.

10. A lifting hitch according claim 9, **characterized in that** the first hitch device (51, 52, 53) is twisted by 90° in relation to the second hitch device (51, 52, 53).

## Revendications

1. Attelage rapide (1) avec une console rapportée (2), une console pivotante (3) supportée de façon pivotante par rapport à la console rapportée (2) autour d'un axe de pivotement (31) et un élément de chariot l'élément de chariot (4) supporté de façon coulissante dans la console pivotante (3), dans lequel la console rapportée (2) comporte un dispositif de verrouillage (21) pour le verrouillage de l'élément de chariot (4) dans la position relevée de la console pivotante (3), et dans lequel l'élément de chariot (4) peut être verrouillé dans au moins deux positions différentes au moyen du dispositif de verrouillage (21), dans lequel l'élément de chariot (4) présente un réceptacle (49) et un élément d'attelage (5) pour l'adaptation à différentes remorques, en particulier un crochet de traction (51), une barre d'attelage oscillante (52) ou une boule d'attelage (53), est fixé de façon amovible dans le réceptacle, **caractérisé en ce que** différentes longueurs de réalisation de l'élément d'attelage (5) sont prévues.

2. Attelage rapide selon la revendication 1, **caractérisé en ce que** le dispositif de verrouillage (21) comprend au moins un boulon (22) et l'élément de chariot (4) présente des alésage (41) symétriques.

3. Attelage rapide selon la revendication 2, **caractérisé en ce que** le boulon (22) est précontraint vers la position de verrouillage.

4. Attelage rapide selon la revendication 2 ou 3, **caractérisé en ce que** le boulon (22) présente une extrémité (23) qui se resserre en cône pour se mettre en prise dans les alésages (41) et/ou **en ce que** les alésages (41) s'élargissent en forme de cône en direction du boulon (22).

5. Attelage rapide selon la revendication 2, 3 ou 4, **caractérisé en ce que** le dispositif de verrouillage (21) comprend deux boulons (22), un système de vérin (32) étant disposé entre les boulons (22) pour déplacer l'élément de chariot (4).

6. Attelage rapide selon l'une des revendications 1 à 4, **caractérisé en ce que** le dispositif de verrouillage (21), de préférence le boulon (22), est disposé entre deux systèmes de vérin (32) pour le déplacement de l'élément de chariot (4).

7. Attelage rapide selon l'une des revendications 1 à 6, **caractérisé en ce que** le dispositif de verrouillage (21) est disposé entre l'axe de pivotement (31) et une plaque de fixation (27).

8. Attelage rapide selon l'une des revendications 1 à 7, **caractérisé en ce que** la console rapportée (2) comprend un mécanisme de fixation (28) avec un élément de fixation (29) coopérant avec l'élément d'attelage (5), en particulier un élément presseur.

9. Attelage rapide selon l'une des revendications 1 à 8, **caractérisé en ce que** l'élément d'attelage (5) présente à une première extrémité un premier dispositif d'attelage (51, 52, 53) et à la deuxième extrémité opposée à la première extrémité un deuxième dispositif d'attelage (51, 52, 53).

10. Attelage rapide selon la revendication 9, **caractérisé en ce que** le premier dispositif d'attelage (51, 52, 53) est tourné de 90° par rapport au deuxième dispositif d'attelage (51, 52, 53).
